# EUROPÄISCHE PATENTSCHRIFT

(11) **EP 1 396 331 B1**
(45) Veröffentlichungstag und Bekanntmachung des Hinweises auf die Patenterteilung: **09.11.2005**
(21) Anmeldenummer: 03019835.2
(22) Anmeldetag: 30.08.2003
(51) Int. Cl.: B29C 47/04, B29C 47/50, B60J 10/00

(54) **Strangförmige Fahrzeugdichtung sowie Verfahren und Vorrichtung zu ihrer Herstellung**
Cord-like seal for vehicle, process and apparatus for manufacturing it
Joint étanche pour véhicule sous forme de bande, procédé et dispositif pour sa fabrication

(30) Priorität: 03.09.2002 EP 02019619
(43) Veröffentlichungstag der Anmeldung: 10.03.2004
(73) Patentinhaber: Troester GmbH & Co.KG, D-30519 Hannover (DE)
(72) Erfinder: Reineke, Frank, 30952 Ronnenberg (DE)
(74) Vertreter: Junius, Walther

(56) Entgegenhaltungen:
- EP-A- 0 627 341
- EP-A- 1 153 799
- GB-A- 2 327 699
- US-B1- 6 406 785

## Beschreibung

Die Erfindung betrifft eine strangförmige Fahrzeugdichtung, die mit einer flexiblen Bewehrung mit U- oder C-förmigem oder daraus ableitbarem Querschnitt ausgestattet ist, sowie Verfahren und Vorrichtungen zu deren Herstellung.

Beim Zusammenbau der Karosserieteile von Kraft- und anderen Fahrzeugen und an Orten, wo bewegliche Karosserieteile an unbeweglichen Karosserieteilen anliegen, werden an vielen Stellen Dichtungen benötigt, die das Eindringen von Wasser, Abgasen, Staub und/oder Zugluft in Fahrzeuginnenräume verhindern. Diese Dichtungen bestehen aus Dichtungsstreifen zwischen den einzeinen Teilen, die endlos hergestellt und für den Einbau auf die benötigten Längen geschnitte werden.

Bisher werden diese strangförmigen Dichtungen meist gemäß der EP 11 53 799 A mit einer metallischen Bewehrung in Form eingelegter Drähte hergestellt. Es ist aus dieser EP 11 53 799 auch bekannt, in der weichen Dichtungsmasse eine aus zwei extrudierten Kunststoffmassen unterschiedlicher Schrumpfung bestehende Bewehrung anzuordnen, um der Dichtung eine gewünschte Krümmung zu geben und sogar die Krümmungsrichtung durch Wechsel der Lage der Massen zu wechseln.

Aus der GB 23 27 699 A ist eine strangförmige Fahrzeugdichtung bestehend aus einem weichen schmiegsamen Extrudat bekannt geworden, in das eine eine in einem gesonderten Arbeitsgang vorgefertigte Bewehrung aus einem gestanzten U-förmigen Streifen aus Blech oder Kunststoff eingelegt ist.

Ein anderes Verfahren der Herstellung besteht im Stand der Technik aus mäanderförmig gebogenen Runddrähten, weiche mit textilen Fäden zusammengefügt und welche ebenfalls von einer extrudierten elastischen Masse ummantelt werden. Die Verformung solcher Streifen zu der für ein Dichtungsprofil benötigten U-Form erfolgt kontinuierlich in mehreren Schritten, meist in angetriebenen Rollensystemen.

Die Herstellung dieser Dichtungsstreifen ist aufwendig und teuer, die Verwendung von Metall als Bewehrung der Elastomermasse ist bei der späteren Verarbeitung und Nutzung der strangförmigen Fahrzeugdichtungen oft nachteilig. Die Entsorgung und ein Recycling ist mit Schwierigkeiten verbunden.

Die Erfindung vermeidet die Nachteile des Standes der Technik. Es ist die Aufgabe der Erfindung, mit einfachen Mitteln eine recyclebare Dichtung ohne metallische Festigkeitsträger zu schaffen, deren Fertigung und Verarbeitung einfacher ist und die in einfach aufgebauten Maschinen herstellbar ist.

Die erfindungsgemäße Fahrzeugdichtung mit einer flexiblen strangförmige Bewehrung zeichnet sich dadurch aus, daß die Bewehrung einen Strang aus wenigstens zwei verschiedenen Stoffen bildet, der aus einzelnen Abschnitten eines nichtmetallischen, welch-elastischen Materials zusammen mit einzelnen Abschnitten eines anderen nichtmetallischen, jedoch form- und biegesteifen Materials besteht, wobei die einzelnen Abschnitte der Bewehrung intermittierend jeweils hintereinander im Wechsel angeordnet sind.

Die aus einem nichtmetallischen, jedoch formund biegesteifern Material bestehenden Teile der Bewehrung mit U- oder C-förmigem oder daraus ableitbarem Querschnitt bilden die klemmenden Teile der Bewehrung, die zwischen ihnen angeordneten weichen elastischen Abschnitte geben der Bewehrung die Biegsamkeit und beide zusammenhängenden Arten der Abschnitte der Bewehrung sind in das weiche Material der Fahrzeugdichtung ganz oder teilweise eingebettet und bilden mit diesem einen Profilstrang.

Durch die U- oder C-förmige Querschnittsform erhält das formund biegesteife Material der Bewehrung die Möglichkeit, an Karosserietellen des Fahrzeugs festgeklemmt zu werden, wodurch die Befestigung der streifenförmigen Fahrzeugdichtung am Fahrzeug ermöglicht wird.

Auf diese Weise wird eine metallfreie strangförmige Fahrzeugdichtung erhalten, der leichter zu verarbeiten, zu entsorgen und zu recyclen ist. Die Fahrzeugdichtungen werden auf eine vorstehende Kante aufgesteckt, sie können aber auch In eine Nut eingesetzt werden.

Je nach den Anforderungen der Praxis an die Dichtungen, Je nach den geraden und den kurvenförmigen Verläufen der in ein Fahrzeug eingebauten Dichtung kann es zweckmäßig sein, daß die Abschnitte des nichtmetallischen, jedoch weichelastischen Materials eine andere oder gleiche Länge als die Abschnitte des nichtmetallischen, jedoch form- und biegesteifen Materials aufweisen.

So wird es je nach dem mit dieser Dichtung auszustattenden Fahrzeugtyp zweckmäßig sein, daß die Längen der Abschnitte des nichtmetallischen, jedoch welch-elastischen Materials und/oder die Längen der Abschnitte des nichtmetallischen, jedoch form- und biegesteifen Materials innerhalb des Stranges varileren.

Bei dieser strangförmige Fahrzeugdichtung ist es zweckmäßig, daß das nichtmetallische, jedoch welch-elastische Material ein thermoplastisches Elastomer ist und daß das nichtmetallische, jedoch form- und biegesteife Material ein Kunststoff ist.

Mit Vorteil wird bei dieser strangförmige Fahrzeugdichtung der Bewehrungsstrang mit einem oder weiteren Weich- oder Kunststoffen ganz oder teilweise ummantelt.

Dabei können die weiteren Weich- oder Kunststoffe mindestens einen Hohlraum ganz oder teilweise umschließen.

Das Verfahren zur Herstellung dieser strangförmigen Fahrzeugdichtung, die mit einer flexiblen Bewehrung mit U- oder C-förmigem oder daraus ableitbarem Querschnitt ausgestattet ist, zeichnet sich dadurch aus, daß die Bewehrung als Strang aus wenigstens zwei verschiedenen Stoffen gebildet wird, indem ein nichtmetallisches, welch-elastisches Material in einzelnen Abschnitten zusammen mit einem anderen nichtmetallischen, jedoch form- und biegesteifen Material in einzelnen Abschnitten ausgeformt wird, wobei die einzeinen Abschnitte intermittierend, jeweils hintereinander im Wechsel angeordnet werden.

Das ist ein einfacher im Extrusionsverfahren Herstellungsprozeß für die Bewehrung, der auch durch eine weitere Extrusionsstufe bis zur fertigen Fahrzeugdichtung In einem einzigen Arbeitsgang durchgeführt werden kann.

Dabei benutzt man vorteilhafter Weise als nichtmetallisches weichelastisches Material ein thermoplastisches Elastomer, als nichtmetallisches form- und biegesteifes Material einen Kunststoff.

Man kann die Längen der Abschnitte des nichtmetallischen weich-elastischen Materials und die Längen der Abschnitte des nichtmetallischen form- und blegesteifen Materials innerhalb des Stranges gleiche und auch ungleiche Längen haben lassen, man kann die-Längen der Strangabschnitte während der Herstellung des Stranges variieren, je nach den Erfordernissen an in gewisse Radien zu biegenden Stellen.

Die erfindungsgemäße Vorrichtung zur Herstellung der strangförmigen flexiblen Bewehrung für eine Fahrzeugdichtung besteht aus zwei Extrudern, einem gemeinsamen Spritzkopf und einer zwischen den Extrudern und dem Spritzkopf angeordneten Intermissionsvorrichtung, wobei der Spritzkopf zur Ausformung eines aus zwei verschiedenen Stoffen, eines klemmfähigen und eines form- und biegesteifen Stoffes, von U- oder C-förmigen oder daraus ableitbarem Querschnitt ausgelegt ist, und zeichnet sich dadurch aus, daß die Intermissionsvorrichtung die Stränge der aus den zwei Extrudern austretendenExtrudatmassen im Wechsel nacheinander teilt und die geteilten Extudatmassen einzeln in ständigem Wechsel hintereinander in den gemeinsamen Spritzkopf einpreßt, so daß diese als einzelne Abschnitte des Bewehrungsstranges intermittierend hintereinander im Wechsel angeordnet sind.

Dabei besteht die Intermissionsvorrichtung aus zwei Rotoren welche an ihrem Umfang Ausnehmungen und zwischen diesen Ausnehmungen Vorsprünge aufweisen, wobei die Vorsprünge des einen Rotors jeweils in die Ausnehmungen des anderen Rotors eingreifen, daß die geometrische Form der Vorsprünge und der Ausnehmungen so gewählt ist, daß der Umfang des Vorsprungs sich jeweils an dem Umfang der Ausnehmung, in die er eingreift, abwälzt und dabei das in dieser Ausnehmung vorhandene Volumen zwischen dem Umfang der Ausnehmung und dem Umfang des Vorsprungs vermindert und daß im Gehäuse eine zum Spritzkopf führende ortsfeste öffnung am Ort der von dem Innenumfang der Ausnehmung und dem Außenumfang des Vorsprungs gebildeten Kammer für den Austritt des Extrudates aus dieser sich ständig in ihrem Volumen ändernden Kammer vorgesehen ist.

Vorteihafte Ausführungsformen dieser Vorrichtung bestehen darin,
- daß die Flanken der Kammern Evolventenform aufweisen, deren Herstellung leicht beherrschbar ist und die ein relativ verschleißarmes Arbeiten ermöglicht,
- daß jeder Rotor (12, 13) einen eigenen Antrieb hat und damit ein gemeinsames Getriebe erspart,
- daß die Intermissionsvorrichtung mindestens einen zu- und abschaltbaren Bypaß für eine sequentielle Zu- und Abschaltung der Weich- und/oder Hartkomponente aufweist, so daß die Längen der Abschnitte leicht steuerbar sind,
- daß die Rotoren paarweise gegen andere mit anderem Füllvolumen austauschbar sind, um verschiedenste Dichtungen herstellen zu können,
- daß die Rotoren mit gleichen oder unterschledlichen Kammervolumina ausgestattet sind, um die Größe der Dichtungen variieren zu können,
- daß die Rotoren in Gleit- oder Wälztagem gelagert sind, um möglichst verschleißfrei arbelten zu können.

Das Wesen der Erfindung ist nachstehen anhand eines in der Zeichnung schematisch dargestellten Ausführungsbeispieles näher erläutert. Es zeigen:
- Fig.1: eine Ansicht eines als Basis verwendeten Profilstranges,
- Fig.2: einen Querschnitt durch einen mit Ummantelung versehenen Profilstrang, die linke Hälfte mit einem Bewehrungsteil aus Hartstoff,
die rechte Hälfte mit einem Bewehrungsteil aus Weichstoff
- Fig.3: eine Extrusionsanlage zur Herstellung der strangförmigen Fahrzeugdichtung.,
- Fig.4: die Intermissionsvorrichtung dieser Anlage im Schnitt.

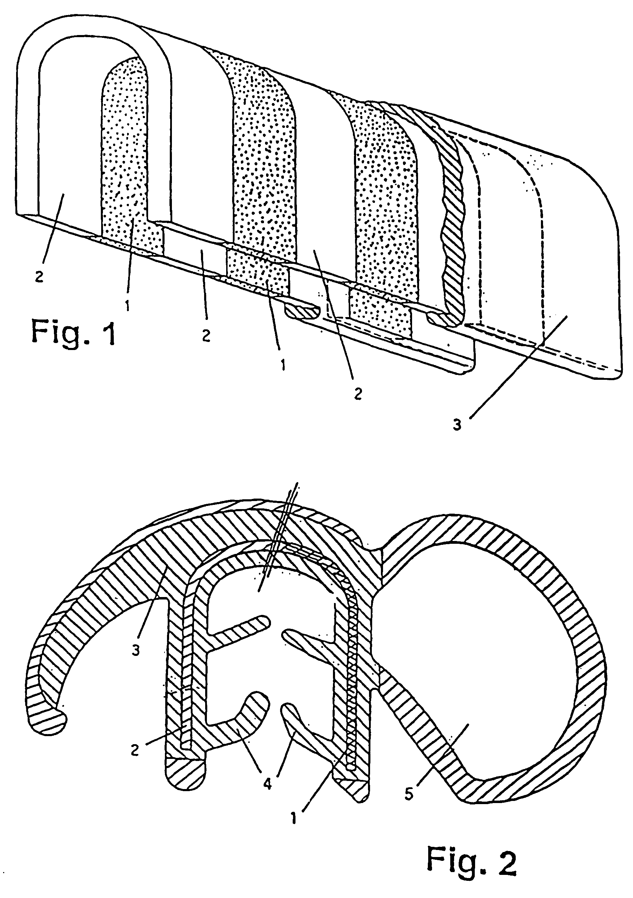

Der in Fig.1 dargestellte Dichtungsstrang besteht aus einer intermittierend extrudierten welchen elastischen Masse 1, zwischen deren Teilen sich als Bewehrung Im Querschnitt U-förmige Körper 2 befinden, die aus einem härteren ebenfalls extrudiertem Kunststoff bestehen, welche voneinander beabstandet zwischen den Teilen aus der weichen elastischen Masse 1 angeordnet sind. Diese als Bewehrung dienenden Körper 2 weisen eine geringere Elastizität, aber größere Härte auf. Dieser Dichtungsstrang ist von einer weiteren elastischen Masse 3, die ebenfalls Im Extrusionsverfahren aufgebracht ist, ummantelt. Diese weitere Kunststoffmasse 3 kann, wie Fig.2 zeigt, Dichtungslippen 4 tragen und einen Hohlraum 5 umschließen. Dieser Dichtungsstrang kann in den verschiedensten Dimensionen und Querschnittsformen hergestellt werden, er kann mit verschiedensten extrudierbaren Materialien ganz oder teilweise ummantelt sein.

Die Dichtungslippen 4 und Hohlräume nach Art des Hohlraumes 5 können allerdings auch mit der elastischen Masse 1 einstückig im Extrusionsverfahren hergestellt werden.

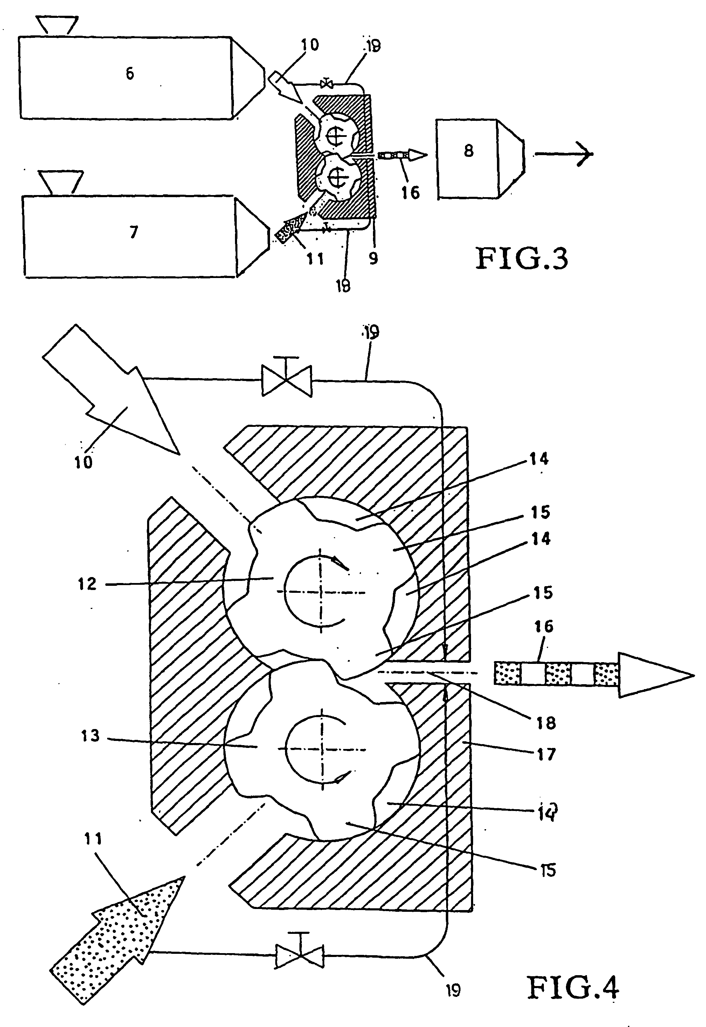

Die Fig.3 zeigt eine Extrusionsanlage zur Herstellung eines aus zwei extrudierbaren Materialien bestehenden Dichtungsstreifens, bei dem das eine Material 1 zwischen dem anderen Material 2 intermittiert angeordnet ist, wie es die Fig.1 und 2 zeigen. Diese Anlage besteht aus zwei Extrudern 6,7 und einem gemeinsamen Spritzkopf 8. Sie zeichnet sich dadurch aus, daß zwischen den zwei Extrudern 6,7 und dem Spritzkopf 8 eine Vorrichtung 9 angeordnet ist, welche die Stränge 10, 11 der beiden Extruder6,7 in quer zur Strangachse verlaufenden Schnitten teilt und die geteilten Extrudatmassen in ständigem Wechsel nacheinander in den gemeinsamen Spritzkopf 8 einpreßt.

Diese in Fig.4 dargestellte, zwischen den zwei Extrudern 6,7und dem Spritzkopf 8 angeordnete Vorrichtung 9 , die zur Teilung, zur Intermission der beiden Extrudatstränge 10,11 und zur Zusammenfügung der intermittierten Teile zu einem neuen Strang 16 dient, besteht aus zwei Rotoren 12,13, welche an ihrem Umfang Ausnehmungen 14 und zwischen diesen Ausnehmungen 14 Vorsprünge 15 aufweisen, wobei die Vorsprünge 15 des einen Rotors 12 oder 13 jeweils in die Ausnehmungen 14 des anderen Rotors 13 oder 12 eingreifen. Die geometrische Form der Vorsprünge 15 und Ausnehmungen 14 ist so gewählt, daß der Umfang des Vorsprungs 15 sich jeweils an dem Umfang der Ausehmung 14, in die er eingreift, abwälzt und dabei das in dieser Ausnehmung 14 vorhandene Volumen zwischen dem Umfang der Ausnehmung 14 und dem Umfang des Vorsprunges 15 vermindert. ImGehäuse 17 befindet sich ein zum Spritzkopf 8 führender Kanal 18, der am Ort des Ineinandergreifens der Vorsprünge 15 und Ausnehmungen 14 der Rotoren 12,13 beginnt und zum Spritzkopf 8 führt. Die beiden Rotoren 12,13 arbeiten ähnlich wie eine Zahnradpumpe: Sie fügen die aus den beiden Extrudern 6,7 ausgepreßte Materialien intermittierend zusammen, weil sie nacheinander einmal das in der Ausnehmung 14 des Rotars 12 und anschließend das in der Ausnehmung 14 des Rotors 13 eingelagerte Material in ständiger Folge auspressen und durch den Kanal 18 zum Spritzkopf 8 weiterleiten.

Dieses durch die Rotoren 12,13 gelaufene und aus dem Spritzkopf auszupressende Material besteht, wenn es in den Spritzkopf 8 einläuft, aus einem Strang 16, der in ständiger Folge und ständigem Wechsel aus einem Strangstück weichen Extrudats und einem Strangstück form- und biegesteiferen Materials besteht.

Es können Bypässe 19 vorgesehen sein, welche den Weg der extrudierten Materialien über die Rotoren 12,13 umgehen.

### Liste der Bezugszeichen

- 1: Abschnitte des weich-elastischen Materials
- 2: Abschnitte des form- und biegesteifen Materials
- 3: Ummantelung aus elastischer Masse
- 4: Dichtungslippen
- 5: Hohlraum
- 6: Extruder
- 7: Extruder
- 8: Spritzkopf
- 9: Intermissionsvorrichtung
- 10: Extrudatstrang
- 11: Extrudatstrang
- 12: Rotor
- 13: Rotor
- 14: Ausnehmung im Rotor 12 und 13
- 15: Vorsprung im Rotor 12 und 13
- 16: intermittierend zusammengesetzter Strang
- 17: Gehäuse
- 18: Kanal
- 19: Bypaß

## Patentansprüche

1. Strangförmige Fahrzeugdichtung, die mit einer flexiblen Bewehrung mit U. oder C-förmigem oder daraus ableitbarem Querschnitt ausgestattet ist,
**dadurch gekennzeichnet,**
**daß** die Bewehrung einen Strang aus wenigstens zwei verschiedenen Stoffen bildet, der aus einzelnen Abschnitten (1) eines nichtmetallischen, weich-elastischen Materials zusammen mit einzelnen Abschnitten (2) eines anderen nichtmetallischen, jedoch form- und biegesteifen Materials besteht,
wobei die einzelnen Abschnitte (1,2) der Bewehrung intermittierend jeweils hintereinander im Wechsel angeordnet sind.

2. Strangförmige Fahrzeugdichtung nach Anspruch 1,
**dadurch gekennzeichnet,**
**daß** die Abschnitte (1) des nichtmetallischen, jedoch weichelastischen Materials eine andere oder gleiche Länge als die Abschnitte (2) des nichtmetallischen, jedoch form- und blegesteifen Materials aufweisen.

3. Strangförmige Fahrzeugdichtung nach Anspruch 1,
**dadurch gekennzeichnet,**
**daß** die Längen der Abschnitte (1) des nichtmetallischen, jedoch weich-elastischen Materials und/oder die Längen der Abschnitte (2) des nichtmetallischen, jedoch form- und biegesteifen Materials Innerhalb des Stranges varileren.

4. Strangförmige Fahrzeugdichtung nach Anspruch 1,
**dadurch gekennzeichnet,**
**daß** das nichtmetallische, jedoch welch-elastische Material ein thermoplastisches Elastomer ist.

5. Strangförmige Fahrzeugdichtung nach Anspruch 1,
**dadurch gekennzeichnet,**
**daß** das nichtmetallische, jedoch form- und biegesteife Material ein Kunststoff ist.

6. Strangförmige Fahrzeugdichtung nach Anspruch 1 bis 5,
**dadurch gekennzeichnet,**
**daß** der Bewehrungsstrang mit einem oder weiteren Weich oder Kunststoffen (3) ganz oder teilweise ummantelt ist.

7. Strangförmige Fahrzeugdichtung nach Anspruch 6,
**dadurch gekennzeichnet,**
**daß** die weiteren Weich- oder Kunststoffe (3) mindestens einen Hohlraum ganz oder teilweise umschließen.

8. Verfahren zur Herstellung einer strangförmigen Fahrzeugdichtung, die mit einer flexiblen Bewehrung mit U- oder C-förmigem oder daraus ableitbarem Querschnitt ausgestattet ist,
**dadurch gekennzeichnet,**
**daß** die Bewehrung als Strang aus wenigstens zwei verschiedenen Stoffen gebildet wird, indem ein nichtmetallisches, weich-elastisches Material in einzelnen Abschnitten (1) zusammen mit einem anderen nichtmetallischen, jedoch form- und biegesteifen Material in einzelnen Abschnitten (2) ausgeformt wird, wobei die einzelnen Abschnitte (1,2) intermittierend, jeweils hintereinander im Wechsel angeordnet werden.

9. Verfahren nach Anspruch 8,
**dadurch gekennzeichnet**,
deß der Bewehrungsstrang in einem Extrusionsverfahren ausgeformt wird.

10. Verfahren nach Anspruch 9
**dadurch gekennzeichnet,**
**daß** man als nichtmetallisches, jedoch weich-elastisches Material ein thermoplastisches Elastomer wählt.

11. Verfahren nach Anspruch 9
**dadurch gekennzeichnet,**
**daß** man als nichtmetallisches, jedoch form- und biegesteifes Material einen Kunststoff wählt.

12. Verfahren nach Anspruch 8,
**dadurch gekennzeichnet,**
**daß** man die Abschnitte (1) des nichtmetallischen, jedoch weich-elastischen Materials eine andere oder gleiche Länge als die Abschnitte (2) des nichtmetallischen, jedoch form- und blegesteifen Mateals aufweisen läßt.

13. Verfahren nach Anspruch 8,
**dadurch gekennzeichnet,**
**daß** man die Längen der Abschnitte (1) des nichtmetallischen, jedoch weich-elastischen Materials und/oder die Längen der Abschnitte (2) des nichtmetallischen, jedoch form- und biegestelfen Materials innerhalb des Stranges variieren läßt.

14. Verfahren nach Anspruch 8 bis 14,
**dadurch gekennzeichnet,**
**daß** der Bewehrungsstrang mit einem oder weiteren Weich- oder Kunststoffen (3) ganz oder teilweise ummantelt wird.

15. Vorrichtung zur Herstellung einer strangförmigen Fahrzeugdichtung,
die mit einer flexiblen Bewehrung ausgestattet ist, bestehend aus zwei Extrudern (6,7),einem gemeinsamen Spritzkopf (8) und einer zwischen den Extrudern (6,7) und dem Spritzkopf (8) angeordneten Intermissionsvorrichtung (9), wobei
der Spritzkopf (8) zur Ausformung eines aus zwei verschiedenen Stoffen, eines klemmfähigen form- und biegesteifen (2) und eines weich elastischen Stoffes (1), gebildeten Bewehrungsstranges von U- oder C-förmigem oder daraus ableitbarem Querschnitt ausgelegt ist, **dadurch gekennzeichnet, daß** die Intermissionsvorrichtung (9) die Stränge der aus den zwei Extrudern (6,7) austretenden, die Bewehrung bildenden Extrudatmassen im Wechsel nacheinander teilt und die geteilten Extrudatmassen einzeln in ständigem Wechsel hintereinander in den gemeinsamen Spritzkopf (8) einpreßt,
so daß diese als einzelne Abschnitte (1,2) des Bewehrungsstranges intermittierend hintereinander im Wechsel angeordnet sind.

16. Vorrichtung nach Anspruch 15,
**dadurch gekennzeichnet,**
**daß** die Intermissionsvorrichtung (9) aus zwei Rotoren (12,13) besteht, welche an ihrem Umfang Ausnehmungen (14) und zwischen diesen Ausnehmungen (14) Vorsprünge (15) aufweisen;
wobei die Vorsprünge (15) des einen Rotors (12,13) jeweils in die Ausnehmungen (14) des anderen Rotors (13,12) eingreifen,
**daß** die geometrische Form der Vorsprünge (15) und der Ausnehmungen (14) so gewählt ist, daß der Umfang des Vorsprungs (15) sich jeweils an dem Umfang der Ausnehmung (14), in die er eingreift, abwälzt und dabei das in dieser Ausnehmung (14) vorhandene Volumen zwischen dem Umfang der Ausnehmung (14) und dem Umfang des Vorsprungs (15) vermindert
und **daß** im Gehäuse (17) eine zum Spritzkopf (8) führende ortsfeste öffnung (18) am Ort der von dem Innenumfang der Ausnehmung (14) und dem Außenumfang des Vorsprungs (15) gebildeten Kammer für den Austritt des Extrudates aus dieser sich ständig in ihrem Volumen ändernden Kammer vorgesehen ist.

17. Vorrichtung nach Anspruch 16,
**dadurch gekennzeichnet,**
**daß** die Flanken der Kammern Evolventenform aufweisen.

18. Vorrichtung nach Anspruch 16,
**dadurch gekennzeichnet,**
**daß** jeder Rotor (12, 13) einen eigenen Antrieb hat.

19. Vorrichtung nach Anspruch 16,
**dadurch gekennzeichnet,**
**daß** die Intermissionsvorrichtung (9) mindestens einen zuund abschaltbaren Bypaß (19) für eine sequentielle Zu- und Abschaltung der Weich- und/oder Hartkomponente aufweist.

20. Vorrichtung nach Anspruch 16,
**dadurch gekennzeichnet,**
**daß** die Rotoren (12, 13) paarweise gegen andere mit anderem Füllvolumen austauschbar sind.

21. Vorrichtung nach Anspruch 16,
**dadurch gekennzeichnet,**
**daß** die Rotoren mit gleichen oder unterschiedlichen Kammervolumina ausgestattet sind.

22. Vorrichtung nach Anspruch 16
**dadurch gekennzeichnet,**
**daß** die Rotoren in Gleit- oder Wälzlagern gelagert sind.

## Claims

1. Strand-shaped vehicle seal, which is equipped with a flexible reinforcement with a cross-section which is U-shaped or C-shaped or can be derived therefrom, **characterised in that** the reinforcement forms a strand made of at least two different materials, which consists of individual sections (1) of a non-metallic, soft elastic material together with individual sections (2) of another non-metallic, but dimensionally stable and bending-resistant material, the individual sections (1, 2) of the reinforcement being intermittently arranged alternately, one behind the other, in each case.

2. Strand-shaped vehicle seal according to claim 1, **characterised in that** the sections (1) of the non-metallic, but soft elastic material have a different length or the same length as the sections (2) of the non-metallic but dimensionally stable and bending-resistant material.

3. Strand-shaped vehicle seal according to claim 1, **characterised in that** the lengths of the sections (1) of the non-metallic, but soft elastic material and/or the lengths of the sections (2) of the non-metallic but dimensionally stable and bending-resistant material vary within the strand.

4. Strand-shaped vehicle seal according to claim 1, **characterised in that** the non-metallic, but soft elastic material is a thermoplastic elastomer.

5. Strand-shaped vehicle seal according to claim 1, **characterised in that** the non-metallic, but dimensionally stable and bending-resistant material is a plastics material.

6. Strand-shaped vehicle seal according to claim 1 to 5, **characterised in that** the reinforcement strand is completely or partially covered with one or more soft or plastics materials (3).

7. Strand-shaped vehicle seal according to claim 6, **characterised in that** the further soft or plastics materials (3) completely or partially surround at least one cavity.

8. Method for producing a strand-shaped vehicle seal, which is equipped with a flexible reinforcement with a cross-section which is U-shaped or C-shaped or can be derived therefrom, **characterised in that** the reinforcement is formed as a strand made of at least two different materials, **in that** a non-metallic, soft elastic material in individual sections (1) is shaped together with another non-metallic, but dimensionally stable and bending-resistant material in individual sections (2), the individual sections (1, 2) being intermittently arranged alternately, one behind the other, in each case.

9. Method according to claim 8, **characterised in that** the reinforcement strand is shaped in an extrusion method.

10. Method according to claim 9, **characterised in that** a thermoplastic elastomer is selected as the non-metallic, but soft elastic material.

11. Method according to claim 9, **characterised in that** a plastics material is selected as the non-metallic but dimensionally stable and bending-resistant material.

12. Method according to claim 8, **characterised in that** the sections (1) of the non-metallic but soft elastic material is allowed to have a different length or the same length as the sections (2) of the non-metallic but dimensionally stable and bending-resistant material.

13. Method according to claim 8, **characterised in that** the lengths of the sections (1) of the non-metallic but soft elastic material and/or the lengths of the sections (2) of the non-metallic by dimensionally stable and bending-resistant material are allowed to vary within the strand.

14. Method according to claim 8 to 14, **characterised in that** the reinforcement strand is completely or partially covered with one or more soft or plastics materials (3).

15. Device for producing a strand-shaped vehicle seal, which is equipped with a flexible reinforcement, consisting of two extruders (6, 7), a common extruder head (8) and an intermission device (9) arranged between the extruders (6, 7) and the extruder head (8), wherein the extruder head (8) is designed to shape a reinforcement strand which is formed from two different materials, a clampable dimensionally stable and bending-resistant material (2) and a soft elastic material (1), and has a cross-section which is U-shaped or C-shaped or can be derived therefrom, **characterised in that** the intermission device (9) divides the strands of the extrudate masses issuing from the two extruders (6, 7) and forming the reinforcement, alternately one after the other, and individually presses the divided extrudate masses always alternately one behind the other into the common extruder head (8), so they are intermittently arranged alternately one behind the other as individual sections (1, 2) of the reinforcement strand.

16. Device according to claim 15, **characterised in that** the intermission device (9) consists of two rotors (12, 13), which at their periphery have recesses (14) and, between these recesses (14), have projections (15); wherein the projections (15) of the one rotor (12, 13) each engage in the recesses (14) of the other rotor (13, 12), **in that** the geometric form of the projections (15) and the recesses (14) is selected such that the periphery of the projection (15) in each case rolls on the periphery of the recess (14), in which it engages, and thus reduces the volume present in this recess (14) between the periphery of the recess (14) and the periphery of the projection (15) and **in that**, in the housing (17), a fixed aperture (18) leading to the extruder head (8) is provided at the site of the chamber formed by the inner periphery of the recess (14) and the outer periphery of the projection (15) for the discharge of the extrudate from this chamber which constantly changes with respect to its volume.

17. Device according to claim 16, **characterised in that** the flanks of the chambers have an involute form.

18. Device according to claim 16, **characterised in that** each rotor (12, 13) has its own drive.

19. Device according to claim 16, **characterised in that** the intermission device (9) has at least one bypass (19) which can be switched on an off for a sequential switching on and off of the soft and/or hard component.

20. Device according to claim 16, **characterised in that** the rotors (12, 13) can be exchanged pair-wise for others with different filling volumes.

21. Device according to claim 16, **characterised in that** the rotors are equipped with the same or different chamber volumes.

22. Device according to claim 16, **characterised in that** the rotors are mounted in plain bearings or rolling bearings.

## Revendications

1. Garniture d'étanchéité de véhicule en forme de cordon, qui est équipée d'une armature flexible avec une section transversale en U ou en C ou pouvant être dérivée de celle-ci, **caractérisée en ce que**, l'armature forme un cordon constitué d'au moins deux matériaux différents, lequel est composé de différentes sections (1) d'un matériau non métallique, souple et élastique associées à différentes sections (2) d'un autre matériau non métallique, mais indéformable et résistant à la flexion, moyennant quoi les différentes sections (1, 2) de l'armature sont disposées alternativement de façon discontinue respectivement les unes derrière les autres.

2. Garniture d'étanchéité de véhicule en forme de cordon selon la revendication 1, **caractérisée en ce que**, les sections (1) du matériau non métallique, mais souple et élastique comportent une autre longueur ou une longueur identique à celle des sections (2) du matériau non métallique, mais indéformable et résistant à la flexion.

3. Garniture d'étanchéité de véhicule en forme de cordon selon la revendication 1, **caractérisée en ce que**, les longueurs des sections (1) du matériau non métallique, mais souple et élastique et/ou les longueurs des sections (2) du matériau non métallique, mais indéformable et résistant à la flexion varient au sein du cordon.

4. Garniture d'étanchéité de véhicule en forme de cordon selon la revendication 1, **caractérisée en ce que**, le matériau non métallique, mais souple et élastique, est un élastomère thermoplastique.

5. Garniture d'étanchéité de véhicule en forme de cordon selon la revendication 1, **caractérisée en ce que**, le matériau non métallique, mais indéformable et résistant à la flexion, est un matériau plastique.

6. Garniture d'étanchéité de véhicule en forme de cordon selon la revendication 1 à 5, **caractérisée en ce que**, le cordon d'armature est enveloppé entièrement ou partiellement d'une matière souple ou de matières plastiques (3), ou d'autres matières souples ou matières plastiques.

7. Garniture d'étanchéité de véhicule en forme de cordon selon la revendication 6, **caractérisée en ce que**, les autres matières souples ou matières plastiques (3) contiennent entièrement ou partiellement au moins une cavité.

8. Procédé de fabrication d'une garniture d'étanchéité en forme de cordon, qui est équipée d'une armature flexible avec une section transversale en U ou en C ou pouvant être dérivée de celle-ci, **caractérisé en ce que**, l'armature est formée comme un cordon constitué d'au moins deux matériaux différents, dans la mesure où un matériau non métallique, souple et élastique dans différentes sections (1) est façonné conjointement avec un autre matériau non métallique, mais indéformable et résistant à la flexion dans différentes sections (2), moyennant quoi les différentes sections (1, 2) sont disposées alternativement de façon discontinue respectivement les unes derrière les autres.

9. Procédé selon la revendication 8, **caractérisé en ce que**, le cordon d'armature est façonné dans un procédé d'extrusion.

10. Procédé selon la revendication 9, **caractérisé en ce que**, on choisit comme matériau non métallique, mais souple et élastique, un élastomère thermoplastique.

11. Procédé selon la revendication 9, **caractérisé en ce que**, on choisit comme matériau non métallique, mais indéformable et résistant à la flexion, un matériau plastique.

12. Procédé selon la revendication 8, **caractérisé en ce que**, on peut faire en sorte que les sections (1) du matériau non métallique, mais souple et élastique, présentent une autre longueur ou une longueur identique aux sections (2) du matériau non métallique, mais indéformable et résistant à la flexion.

13. Procédé selon la revendication 8, **caractérisé en ce que**, on peut faire en sorte que les longueurs des sections (1) du matériau non métallique, mais souple et élastique, et/ou les longueurs des sections (2) du matériau non métallique, mais indéformable et résistant à la flexion, varient au sein du cordon.

14. Procédé selon la revendication 8 à 13, **caractérisé en ce que**, le cordon d'armature est enveloppé entièrement ou partiellement d'une matière souple ou de matières plastiques (3), ou d'autres matières souples ou matières plastiques.

15. Dispositif de fabrication d'une garniture d'étanchéité de véhicule en forme de cordon,
qui est équipée d'une armature flexible, composée de deux extrudeuses (6, 7), d'une tête d'injection (8) commune et
d'un dispositif d'intermittence (9) disposé entre les extrudeuses (6, 7) et la tête d'injection (8), moyennant quoi
la tête d'injection (8) est prévue pour le façonnage d'un cordon d'armature formé de deux matériaux différents, d'un matériau (2) indéformable et résistant à la flexion (2) apte au serrage, et d'un matériau souple et élastique (1) ayant une section transversale en U ou en C ou pouvant être dérivée de celle-ci, **caractérisée en ce que** le dispositif d'intermittence (9) sépare successivement alternativement les masses de produit d'extrusion formant l'armature et s'échappant des deux extrudeuses (6, 7), et injecte les masses de produit d'extrusion séparées individuellement alternativement de façon continue successivement dans la tête d'injection commune (8),
de sorte que celles-ci sont disposées alternativement successivement de façon discontinue comme des sections différentes (1, 2) du cordon d'armature.

16. Dispositif selon la revendication 15, **caractérisé en ce que**,
le dispositif d'intermittence (9) est composé de deux rotors (12, 13) qui comportent sur leur périmètre des cavités (14) et des saillies (15) entre ces cavités (14),
moyennant quoi les saillies (15) d'un rotor (12, 13) s'engagent respectivement dans les cavités (14) de l'autre rotor (13, 12),
de sorte que la forme géométrique des saillies (15) et des cavités (14) est choisie de façon que le périmètre de la saillie (15) s'enroule contre le périmètre de la cavité (14) dans lequel il s'engage, et réduit le volume existant dans ces cavités (14) entre le périmètre de la cavité (14) et le périmètre de la saillie (15)
et de sorte qu'il est prévu dans le boîtier (17) un orifice (18) fixe conduisant à la tête d'injection (8) à l'emplacement de la chambre formée par le périmètre interne de la cavité (14) et le pourtour de la saillie (15) pour l'échappement du produit d'extrusion de cette chambre se modifiant constamment en volume.

17. Dispositif selon la revendication 16, **caractérisé en ce que**, les côtés des chambres présentent une forme développante.

18. Dispositif selon la revendication 16, **caractérisé en ce que**, chaque rotor (12, 13) possède un entraînement propre.

19. Dispositif selon la revendication 16, **caractérisé en ce que**, le dispositif d'intermittence (9) comprend au moins une dérivation (19) pouvant être mise hors circuit et en circuit pour une déconnexion séquentielle des composants souples et/ou durs.

20. Dispositif selon la revendication 16, **caractérisé en ce que**, les rotors (12, 13) peuvent être échangés par paire contre d'autres comportant d'autres volumes de remplissage.

21. Dispositif selon la revendication 16, **caractérisé en ce que**, les rotors sont dotés des mêmes volumes de chambres ou de volumes de chambres différents.

22. Dispositif selon la revendication 16, **caractérisé en ce que**, les rotors sont logés dans les paliers lisses ou des paliers à roulement.
